# EUROPEAN PATENT SPECIFICATION

(11) **EP 3 096 627 B1**
(45) Date of publication and mention of the grant of the patent: **14.03.2018**
(21) Application number: 15705488.3
(22) Date of filing: 23.01.2015
(51) Int. Cl.: A23C 19/028, A23C 19/076, A23C 19/05, A01J 25/00

(54) **PRODUCTION OF ACIDIFIED WHITE CHEESE**
HERSTELLUNG VON ANGESÄUERTEM WEISSKÄSE
PRODUCTION DE FROMAGE BLANC ACIDIFIÉ

(30) Priority: 24.01.2014 DK 201470038
(43) Date of publication of application: 30.11.2016
(73) Proprietor: JH Consulting V/Jørgen Henriksen, 4330 Hvalsø (DK)
(72) Inventor: HENRIKSEN, Jørgen, 4330 Hvalsø (DK)
(74) Representative: Plougmann Vingtoft a/s
(86) International application number: PCT/DK2015/050017
(87) International publication number: WO 2015/110123

(56) References cited:
- EP-A2- 0 065 394
- WO-A1-85/00501
- WO-A1-93/20704
- WO-A1-2013/156032
- FR-A1- 2 247 159
- FR-A1- 2 627 061
- US-A- 4 689 234
- US-A- 5 766 656

## Description

### FIELD OF THE INVENTON

The present invention relates to a system and a method for the production of acidified white cheese filled in containers which can be closed prior to the coagulation of the UF (ultra filtered) retentate or a mix produced from milk protein, vegetable- or animal fat and water. Three ingredients are added to the retentate/mix produced from milk protein, vegetable- and/or animal fat and water before filling NaCl, GDL (glucono delta-lactone) and rennet.

### BACKGROUND OF THE INVENTION

The market for acidified white cheeses such as FETA cast in canisters, retail cups or cartons is expanding rapidly. These cheeses are usually salted by NaCl to a salt content in the final product around 2.5 to 3.5 %. When casting takes place in containers which are closed before coagulation of the retentate/mix produced from milk protein, vegetable- or animal fat and water, the three ingredients NaCl, GDL and rennet should all be in the retentate/mix produced form milk protein, vegetable- or animal fat and water to be filled.

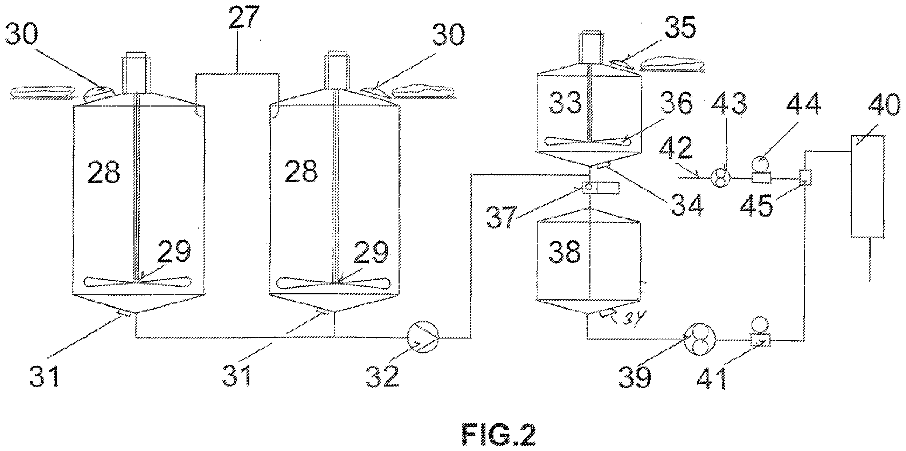

FIG.2 illustrates schematically a batch process in plants working according to the prior art. Pasteurized, homogenized retentate/mix produced from milk protein, vegetable- and/or animal fat and water is through pipeline 27 led to one of the two tanks 28 which are equipped with agitators 29, manholes 30 in the tank tops through which the sacs with NaCl are emptied into the retentate/mix produced from milk protein, vegetable- and/or animal fat and water. The tanks have pressure transmitters 31 for determining and controlling the quantities filled into the tanks. When the desired quantity has been led into the first tank the flow from pipeline 27 is diverted to the other tank and the NaCl is mixed into the product in the first tank, following that the product is ready to have GDL mixed in. Pump 32 will transfer product to the upper tank 33 in the GDL mixing unit, the quantity is controlled by pressure transmitter 34, GDL is dumped to the product through manhole 35 and is mixed into the product by agitator 36. During this operation the valve 37 in the pipeline between the upper tank 33 and the lower tank 38 has been closed. After mixing in the GDL the product can be transferred to the lower tank by opening valve 37. From the lower tank pump 39 will pump the product towards the filling machine 40, the pressure in the discharge line from pump 39 is via a frequency converter on the pump motor controlled by the pressure transmitter 41. Pipeline 42 comes from a container with a rennet solution and pump 43 will controlled by flow transmitter 44 feed a given quantity of rennet solution into the product through injection valve 45.

FR2627061 discloses the continuous production of cheese from skimmed milk retentate powder, which is reconstituted and then acidified using at least one acid-generating agent, preferably glucono-delta-lactone (GDL). After the reconstitution, the retentate can have fat re-added to it. It is possible to add, during the acidification, besides the acid-generating agent, fermenting agents, coagulating enzymes and also salt. In the case where salt is added, the cheese will be especially of the salty soft white cheese type.

WO85/00501 discloses a process for making portioned cheese, wherein concentrated cheese milk is continuously mixed with an acidogen, including GDL, for starting the curlding and ripening process and then filled into suitable individual packages.

WO9320704 discloses the production of cheese on basis of ultrafiltration-concentrated milk, wherein acidified and pasteurized retentate is optionally added to the retentate from the ultrafiltrated milk, which is acidified with at least one starter culture to obtain a pH-value of from 4.5 to 5.6, whereupon salt and optionally other additives, including GDL are added and the retentate is, while supplying cheese rennet, pumped into cheese moulds or ready-made packages wherein the cheese receives final treatment. A problem by producing with GDL is that acidification takes place very fast after the GDL is mixed into the retentate/mix produced from milk protein, vegetable-and/or animal fat and water, and if filling is not completed within ten minutes, the product will start to coagulate. Stops can occur in all types of filling machines and for that reason the GDL mixing units are equipped with water flushing connections, flushing all product mixed with GDL out of the system with a stop of the filling machine. For a plant with an hourly filling capacity of 2000 litres it can easily mean a loss of 300 litres of retentate which corresponds to approximately 1500 litres of whole milk.

### SUMMARY OF THE INVENTION

A first stream of UF retentate and/or mix produced from milk protein, vegetable-and/or animal fat and water is mixed with NaCl and GDL in a mixer and fed to a tank where air is removed and the weight of the contents of the tank is determined.
UF retentate as used herein is used in a manner being ordinary to a skilled person so as to refer to a retentate from ultrafiltrated milk.

Rennet as used herein is used in manner being ordinary to a skilled person and is preferably a complex of enzymes produced in stomachs of ruminant mammals and typically used in the production of most cheeses. Rennet comprising chymosin as a key component and which is a protease enzyme that curdles the casein in milk. In addition to chymosin, rennet contains may preferably comprise other important enzymes such as pepsin and a lipase. There are non-animal sources for rennet that are suitable for consumption by vegetarians.

The content of the tank is recirculated to the mixer. A second stream corresponding to the first stream with added NaCl and GDL is extracted from the tank so that the mass of the mixed stream in the tank is kept within predetermined limits, and rennet is added to the second stream before it is filled into containers which may be closed and sealed before coagulation takes place.

In the present invention this is done in an in-line continuous process substituting the batch systems used in existing plants. The system in the present invention mixes NaCl and GDL in a powder dosing mixing unit followed by a vacuum unit for removal of air mixed into the product. Final dosing of rennet solution is in the line to the filling machine. Compared to equipment according to the prior art, the system of the invention takes up much less floor space in the dairy, it requires less water, steam and chemicals for CIP, less electrical power for operation and CIP. In comparison to the known batch production systems the system of the invention will have much less volume of process mass to be flushed out and possibly discarded in case of an unplanned stop.

### BRIEF DESCRIPTION OF THE DRAWINGS

FIG.1 shows a preferred embodiment of the invention,
FIG.2 is a schematic process flow of a plant according to the prior art

### DETAILED DESCRIPTION OF THE INVENTION

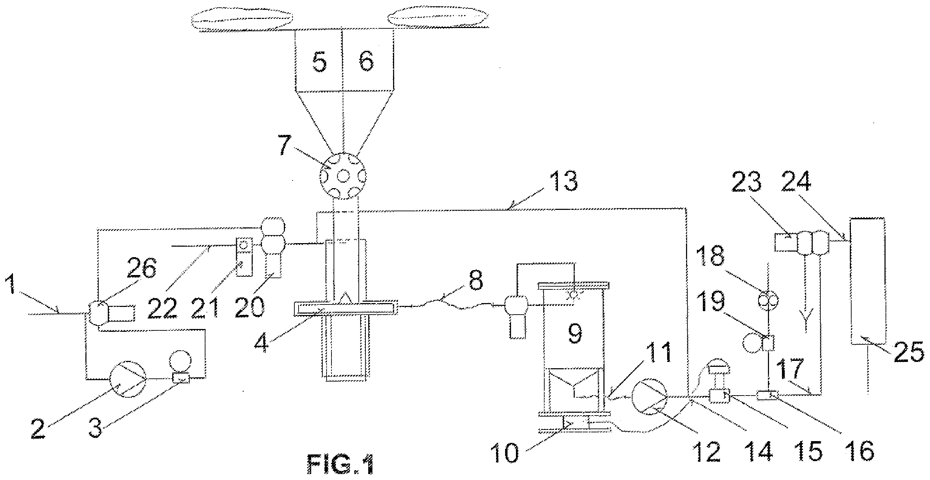

FIG 1 shows a process flow in a system according to the invention. UF retentate and/or mix produced from milk protein, vegetable- and/or animal fat and water is supplied through pipe 1 and fed to the system with pump 2. The capacity of the pump is controlled by flow transmitter 3. 4 is a powder mixer above which are mounted two funnels, one funnel 5 for NaCl and one funnel 6 for GDL. Below the funnels 5, 6 is installed a powder dosing unit 7 with individual regulation of the dosing quantities for NaCl and GDL.

Discharge from the powder mixer is via a flexible hose 8 led in a tangential direction into a vacuum tank 9 which is mounted on a weighing cell 10. The outlet from tank 9 is by a flexible hose 11 connected to the inlet of a circulation pump 12 which through pipe 13 is recirculating the product back to the inlet of the powder mixer 4 at high speed. The flexible hoses 8, 11 ensure that no forces are transmitted to the vacuum tank 9 so that the weighing cell 10 gives reliable data.

In the recirculation circuit from powder mixer 4 over tank 9 and via pump 12 back to powder mixer 4 is inserted a T-junction 14 after pump 12. The T-junction 14 has a branch to an automatic valve 15. Data from the weighing cell 10 control the operation of valve 15 so that the weight of tank 9 is maintained constant by discharging the same weight of mixed product which is introduced to the circulation circuit by pump 2 and the NaCl and GDL dosing.

After valve 15 a rennet solution injector 16 is installed in the pipe line 17 to the filling machine. Rennet solution is dosed by a pump 18 whose capacity is controlled by data from a flow transmitter 19. Should a stop occur e.g. on the filling machine 25 requiring flushing out the product mixed with GDL pump 2 will stop, valve 20 will open towards valve 21 which will open for the water pipe 22. Valve 23 at the pipe 24 to the filling machine will open towards drain or to a collecting vat. Only a small quantity of product is involved in the recirculation process and production can rapidly be resumed following a possible stop.

After final production CIP of the unit is done by connecting pipe 1 to the CIP forward line and connecting the filling machines CIP return line to the central CIP station in the dairy.

## Claims

1. A method of continuous production of acidified cheese, the method comprising
- receiving a first stream of UF retentate and/or mix produced from milk protein, vegetable- and/or animal fat and water,
- feeding the first stream to a mixer (4),
- adding NaCl (5) and GDL (6) to the first stream in the mixer (4),
- mixing the first stream with the added NaCl and GDL to obtain a mixed stream,
- feeding the mixed stream into a tank (9),
- recirculating the mixed stream from the tank (9) through the mixer (4),
- determining the mass of the mixed stream in the tank (9),
- extracting a second stream of the mixed stream from the tank (9) so as to keep the mass of the mixed stream in the tank (9) within predetermined limits,
- adding rennet to the second stream, and
- filling containers with the second stream with added rennet.

2. A method according to claim 1 wherein the mixed stream is fed into the tank in a tangential direction.

3. A method according to claim 1 or 2 further comprising evacuating air from the tank

4. A method according to any one of the preceding claims further comprising, if a problem occurs in handling the second stream such as filling the containers,
- discontinuing receiving the first stream and instead
- receiving a stream of flushing liquid and washing out the received first stream.

5. A system for continuous production of acidified cheese using a method according to any one of the preceding claims, the system comprising
- an inlet (1) for receiving a first stream of UF retentate and/or mix produced from milk protein, vegetable- and/or animal fat and water,
- a mixer (4),
- a first pump (2) for pumping the first stream to the mixer (4),
- a dosing unit (7) for dosing NaCl (5) and GDL (6) to the mixer,
- a tank (9) connected to the mixer (7) for receiving the first stream with NaCl and GDL added,
- a recirculation pump (11) for recirculating the mixed stream from the tank (9) through a recirculation pipe (13) to the mixer (4),
- means (10) for determining the mass of the mixed stream in the tank (9),
- an extraction valve (15) for extracting a second stream from the tank (9) in dependence on a determined mass of the mixed stream in the tank (9),
- a dosing mechanism (18, 19, 16) for dosing and adding rennet to the second stream, and
- a flushing valve (20, 21) for receiving a stream of flushing liquid (22) and directing the stream of flushing liquid (22) to the mixer.

6. A system according to claim 5 wherein fluid connections to the tank (9) are flexible hoses (8, 11).

7. A system according to claim 5 or 6 further having means for evacuating the tank (9).

8. A system according to any one of claims 5-7 wherein the tank (9) is arranged for entering the mixed stream in the tank in a tangential direction.

## Patentansprüche

1. Verfahren zur dauerhaften Herstellung von angesäuertem Käse, wobei das Verfahren Folgendes umfasst:
- Empfangen eines ersten Stroms von UF-Retentat und/oder einem Gemisch, hergestellt aus Milchprotein, pflanzlichem und/oder tierischem Fett und Wasser,
- Einspeisen des ersten Stroms in eine Mischvorrichtung (4),
- Hinzufügen von NaCl (5) und GDL (6) zu dem ersten Strom in der Mischvorrichtung (4),
- Mischen des ersten Stroms mit dem hinzugefügten NaCl und GDL, um einen gemischten Strom zu erhalten,
- Einspeisen des gemischten Stroms in einen Tank (9),
- Rückführung des gemischten Stroms aus dem Tank (9) durch die Mischvorrichtung (4),
- Bestimmen der Masse des gemischten Stroms in dem Tank (9),
- Herausnehmen eines zweiten Stroms des gemischten Stroms aus dem Tank (9), sodass die Masse des gemischten Stroms in dem Tank (9) innerhalb vorbestimmter Grenzen bleibt,
- Hinzufügen von Lab zu dem zweiten Strom, und
- Füllen von Behältern mit dem zweiten Strom mit hinzugefügtem Lab.

2. Verfahren nach Anspruch 1, wobei der gemischte Strom in einer tangentialen Richtung in den Tank eingespeist wird.

3. Verfahren nach Anspruch 1 oder 2, ferner umfassend ein Ablassen von Luft aus dem Tank.

4. Verfahren nach einem der vorstehenden Ansprüche, ferner Folgendes umfassend, wenn ein Problem beim Handhaben des zweiten Stroms, wie etwa dem Füllen der Behälter, auftritt:
- Unterbrechen des Empfangens des ersten Stroms und stattdessen
- Empfangen eines Stroms von Spülflüssigkeit und Auswaschen des empfangenen ersten Stroms.

5. System zur dauerhaften Herstellung von angesäuertem Käse unter Verwendung eines Verfahrens nach einem der vorstehenden Ansprüche, wobei das System Folgendes umfasst:
- einen Einlass (1) zum Empfangen eines ersten Stroms von UF-Retentat und/oder einem Gemisch, hergestellt aus Milchprotein, pflanzlichem und/oder tierischem Fett und Wasser,
- eine Mischvorrichtung (4),
- eine erste Pumpe (2) zum Pumpen des ersten Stroms zu der Mischvorrichtung (4),
- eine Dosiereinheit (7) zum Dosieren von NaCl (5) und GDL (6) für die Mischvorrichtung,
- einen Tank (9), der mit der Mischvorrichtung (7) verbunden ist, zum Empfangen des ersten Stroms mit hinzugefügtem NaCl und GDL,
- eine Rückführpumpe (11) zur Rückführung des gemischten Stroms aus dem Tank (9) durch ein Rückführrohr (13) zu der Mischvorrichtung (4),
- Mittel (10) zum Bestimmen der Masse des gemischten Stroms in dem Tank (9),
- ein Entnahmeventil (15) zum Herausnehmen eines zweiten Stroms aus dem Tank (9) in Abhängigkeit von der bestimmten Masse des gemischten Stroms in dem Tank (9),
- einen Dosiermechanismus (18, 19, 16) zum Dosieren und Hinzufügen von Lab zu dem zweiten Strom, und
- ein Spülventil (20, 21) zum Empfangen eines Stroms von Spülflüssigkeit (22) und Leiten des Stroms von Spülflüssigkeit (22) zu der Mischvorrichtung.

6. System nach Anspruch 5, wobei Flüssigverbindungen zu dem Tank (9) flexible Schläuche (8, 11) sind.

7. System nach Anspruch 5 oder 6, ferner mit Mitteln zum Ablassen des Tanks (9).

8. System nach einem der Ansprüche 5-7, wobei der Tank (9) so angeordnet ist, dass der gemischte Strom in einer tangentialen Richtung in den Tank eindringt.

## Revendications

1. Procédé de production continue de fromage acidifié, ledit procédé comprenant
- la réception d'un premier flux de rétentat UF et/ou un mélange fabriqué à partir de protéine de lait, de graisse végétale et/ou animale et d'eau,
- l'acheminement du premier flux à un mélangeur (4),
- l'ajout de NaCl (5) et de GDL (6) au premier flux dans le mélangeur (4),
- le mélange du premier flux avec les NaCl et GDL ajoutés pour obtenir un flux mélangé,
- l'acheminement du flux mélangé jusqu'à l'intérieur d'un réservoir (9),
- la recirculation du flux mélangé à partir du réservoir (9) à travers le mélangeur (4),
- la détermination de la masse de flux mélangé dans le réservoir (9),
- l'extraction d'un second flux de flux mélangé à partir du réservoir (9) de façon à maintenir la masse du flux mélangé dans le réservoir (9) à l'intérieur de limites prédéfinies,
- l'ajout de présure au second flux, et
- le remplissage des récipients avec le second flux comprenant la présure ajoutée.

2. Procédé selon la revendication 1, ledit flux mélangé étant acheminé jusque dans le réservoir selon une direction tangentielle.

3. Procédé selon la revendication 1 ou 2, comprenant en outre l'évacuation d'air du réservoir.

4. Procédé selon l'une quelconque des revendications précédentes comprenant en outre, si un problème survient lors de la manipulation du second flux telle que le remplissage des récipients,
- la suspension de la réception du premier flux et à la place
- la réception d'un flux de liquide de rinçage et le nettoyage du premier flux reçu.

5. Système de production continue de fromage acidifié à l'aide d'un procédé selon l'une quelconque des revendications précédentes, ledit système comprenant
- une entrée (1) destinée à la réception d'un premier flux de rétentat UF et/ou d'un mélange produit à partir de protéines de lait, de graisse végétale et/ou animale et d'eau,
- un mélangeur (4),
- une première pompe (2) destinée au pompage du premier flux jusqu'au mélangeur (4),
- une unité de dosage (7) destinée au dosage de NaCl (5) et de GDL (6) dans le mélangeur,
- un réservoir (9) raccordé au mélangeur (7) destinée à la réception du premier flux avec les NaCl et GDL ajoutés,
- une pompe de recirculation (11) destinée à la recirculation du flux mélangé depuis le réservoir (9) à travers une conduite de recirculation (13) jusqu'au mélangeur (4),
- un moyen (10) pour déterminer la masse de flux mélangé dans le réservoir (9),
- une soupape d'extraction (15) destinée à l'extraction d'un second flux du réservoir (9) en fonction de la masse déterminée de flux mélangé dans le réservoir (9),
- un mécanisme de dosage (18, 19, 16) destiné au dosage et à l'ajout de présure au second flux, et
- une soupape de rinçage (20, 21) pour recevoir un flux de liquide de rinçage (22) et orienter le flux de liquide de rinçage (22) vers le mélangeur.

6. Système selon la revendication 5, lesdits raccords fluidiques au réservoir (9) étant des tuyaux souples (8, 11).

7. Système selon la revendication 5 ou 6, possédant en outre un moyen pour l'évacuation du réservoir (9).

8. Système selon l'une quelconque des revendications 5 à 7, ledit réservoir (9) étant agencé pour introduire le flux mélangé dans le réservoir selon une direction tangentielle.
